# EUROPÄISCHE PATENTANMELDUNG

(11) **EP 2 028 407 A2**
(43) Veröffentlichungstag der Anmeldung: **25.02.2009**
(21) Anmeldenummer: 08013998.3
(22) Anmeldetag: 05.08.2008
(51) Int. Cl.: F16M 11/20

(54) **Wagen mit einer Laufrichtungseinstellvorrichtung zur Durchführung von Kreisfahrten, insbesondere für Film- und Videoaufnahmen**

(30) Priorität: 22.08.2007 DE 102007039611
(71) Anmelder: CRAMER, Sebastian, 80331 München (DE)
(72) Erfinder: CRAMER, Sebastian, 80331 München (DE)
(74) Vertreter: Hano, Christian

(57) **Zusammenfassung**

Der Wagen, insbesondere Kamerawagen, umfasst mindestens drei im Winkelabstand um eine vertikale Achse angeordnete, jeweils um eine horizontale Laufrollenachse (5a, 5b, 5c) drehbare Laufrollen (3a, 3b, 4), wobei die Laufrollenachsen (5a, 5b) von mindestens zwei Laufrollen (3a, 3b) mit einer gemeinsamen Drehachse (A) fluchten und die Laufrollenachse (5c) wenigstens einer weiteren einstellbaren Laufrolle (4) in einer horizontalen Ebene drehbar ist. Es ist eine Laufrichtungseinstellvorrichtung (8, 9, 9a, 11, 12, 14, 15, 18, 21) zur mittelbaren oder unmittelbaren Anzeige und/oder Ermittlung und/oder Einstellung des Abstandes (r) eines Referenzpunktes (10) an dem Wagen (1) zu einem von der Drehstellung der weiteren Laufrolle (4) abhängigen Schnittpunkt (S) zwischen der gemeinsamen Drehachse (A) und der mit der Laufrollenachse (5c) der einstellbaren Laufrolle (4) fluchtenden Drehachse (B) vorgesehen.

## Beschreibung

### Anwendungsgebiet und Stand der Technik

Die Erfindung betrifft einen Wagen mit einer Laufrolleneinstellvorrichtung zur Anzeige, Ermittlung und/oder Einstellung des Abstandes zum Rotationszentrum bei kreisförmigen Fahrbewegungen, gemäß dem Oberbegriff des Anspruchs 1.

Aus DE 10329747 ist ein Schwenkkopfsystem, insbesondere für Film- und Videokameras bekannt, bei dem in einem flachen Halterungselement wenigstens drei Laufrollen angebracht sind, welche sich in ihrer Laufrichtung einzeln ausrichten und feststellen lassen, und zur Einstellung der Laufrichtung Markierungen oder Skalen vorgesehen sind.
Diese Skalen bzw. Einstellvorrichtungen lassen sich dazu nutzen, die Achsen aller Laufrollen so auszurichten, dass sich ihre gedachten Verlängerungen in einem Punkt schneiden. Beim Verschieben der Einheit wird so eine kreisförmige Verfahrbewegung um eben diesen Punkt ausgeführt.

Hierbei muss beim Ausrichten der Laufrollen für kreisförmige Verfahrbewegungen darauf geachtet werden, dass die Verdrehstellung der Laufrichtung der einzelnen Laufrollen sehr genau aufeinander abgestimmt ist. Nur so ist gewährleistet, dass sich die Verlängerungen der einzelnen Achsen präzise in einem Punkt treffen.
Die an den Skalen einzustellenden jeweiligen Laufrichtungen lassen sich mit Hilfe von Tabellen oder kleinen Kalkulationsprogrammen für die einzelnen Räder ermitteln. Ein Nachteil ist hierbei, dass ein derartiger Einstellvorgang recht kompliziert ist und die Distanz zum Rotationszentrum an der Einheit selber nicht mehr ablesbar ist. Für einen Kameramann ist es jedoch sehr hilfreich beim Einstellen einer solchen Kreisfahrt eine exakte Vorstellung über den genauen Radius zu haben, um beispielsweise ein Objekt bei einer Kreisfahrt im Bildmittelpunkt halten zu können.
Ein weiterer Nachteil kann sich ergeben, wenn nicht alle Räder zueinander stimmig ausgerichtet sind, da dann eine Fahrt nicht mehr sauber ausgeführt werden kann.

Aus WO 99/51911 ist ein Kamerawagen mit vier Laufrollenpaaren bekannt, bei dem sich zwei Laufrollenpaare so fixieren lassen, dass ihre Achsen fluchten und die beiden weiteren Laufrollenpaare über eine Lenkvorrichtung so in ihrer Laufrichtung einstellbar sind, dass sich die Verlängerung ihrer Achsen jeweils in einem Punkt auf der Linie der starr ausgerichteten, fluchtenden Achsen treffen. Dies wird mit Hilfe einer aufwendigen Lenkmechanik erreicht, welche ein solches System wenig kostengünstig werden lässt und zudem eine erhebliche Größe aufweist.
Auch hier stehen dem Kameramann keine Informationen über Radius oder Durchmesser einer eingestellten Kreisfahrt zur Verfügung.

### Aufgabenstellung

Der vorliegenden Erfindung liegt die Aufgabe zugrunde, mit konstruktiv einfachen Mitteln einen Wagen zu schaffen, bei dem der Radius oder der Durchmesser einer kreisförmiger Fahrt auf einfache Weise nach Wunsch angezeigt oder vorbestimmt werden kann.

Diese Aufgabe wird gelöst durch einen Wagen mit den Merkmalen des Anspruchs 1. Bevorzugte und vorteilhafte Ausgestaltungen der Erfindung sind Gegenstand der Ansprüche 2 bis 13.

Die mit der Erfindung erzielten Vorteile bestehen insbesondere darin, einem Kameramann eine genaue Vorstellung über Radius oder Durchmesser einer Kreisfahrt zu geben, und ihm so zu ermöglichen, die Bildkomposition direkt auf die Kamerabewegung abzustimmen. Der Abstand zwischen Drehzentrum und einem Referenzpunkt auf dem Wagen ist direkt oder indirekt ablesbar oder bestimmbar.

Eine Reihe von Kameraanwendungen ist somit schneller und mit weniger Aufwand durchzuführen, beispielsweise wenn der Kameramann bei einer Kreisfahrt ein Objekt im Zentrum des Bildes behalten möchte.

Die Weiterbildung nach Anspruch 3 ermöglicht sowohl die Darstellung von metrischen, wie von zölligen Abständen.

Die Weiterbildung nach Anspruch 4 ermöglicht die Darstellung des Abstandes mittels einer Digitalanzeige.

Die Weiterbildung nach Anspruch 6 ermöglicht die parallele Ausrichtung aller Laufrollen, wodurch lineare Fahrten möglich werden.

Die Weiterbildung nach Anspruch 7 und 8 ermöglicht die Ausrichtung der in horizontaler Ebene verdrehbaren Laufrolle, so dass der Kamerawagen eine Kreisfahrt mit einem definierten Radius ausführt.

Die Weiterbildung nach Anspruch 11 ermöglicht es, die Laufrichtungseinstellvorrichtung mitsamt Laufrolle und Lagerung vom Wagen abzunehmen, um andere Laufrollenmodule einzusetzen, beispielsweise Laufrollen, welche sich selbstständig in Fahrtrichtung ausrichten und somit steuerbare Lenkbewegungen zu ermöglichen.

Die Weiterbildung nach Anspruch 12 und 13 ermöglicht es, die Laufrollen als Doppelrollen auszubilden, welche für die Verwendung mit Schienenprofilen besonders geeignet sind.

Die Erfindung ist im Folgenden anhand der Zeichnungen näher erläutert. Es zeigen:
**Fig. 1** eine Draufsicht auf einen Wagen mit einer schematischen Darstellung einer Kreisfahrt;
**Fig. 2** eine Detailansicht auf eine Laufrolle und deren Lagerung in einem Lagerelement, welche mit einer metrischen und zölligen Skala versehen ist;
**Fig. 3** eine Draufsicht auf eine Laufrolle und deren Lagerung in einem Lagerelement, welche mit einer Digitalanzeige und einem Stellmotor versehen ist;
**Fig. 4** eine schaubildliche Darstellung eines Wagens mit einem auf Registrierpins aufsteckbaren Laserpeilelement;
**Fig. 5** eine schematische Darstellung eines Wagens mit zwei an einem verdrehbaren, länglichen Lagerelement montierten Doppelrollen;
**Fig. 6** eine schematische Darstellung eines Wagens mit zwei, jeweils durch Stellantriebe verdrehbaren Doppelrollen;
**Fig. 7** eine Schnittdarstellung durch eine Doppelrolle mit zwei parallel zueinander stehenden Laufrollen;
**Fig. 8** eine Schnittdarstellung durch eine Doppelrolle mit zwei schräg zueinander angeordneten Rollenelementen.

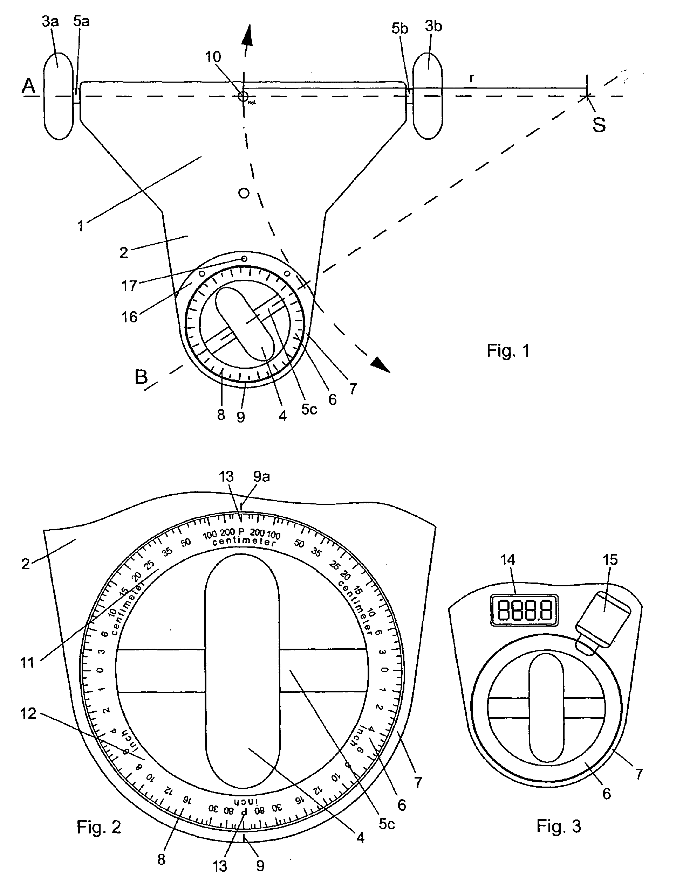

Gemäß Fig. 1 weist der erfindungsgemäße Wagen ein flaches Halterungselement 2 auf, welches auf drei Laufrollen 3a, 3b, 4 aufliegt, die im Winkelabstand um eine gedachte vertikale Achse angeordnet sind, die durch das Halterungselement 2 verläuft. Ein derartiges Halterungselement 2 ist dazu geeignet, Kameraschwenkköpfe zu tragen, die entweder direkt auf der Oberseite des Halterungselements montiert werden oder mittels Säulen, Stativen, Hubvorrichtungen oder ähnlichem erhöht befestigt werden. Sowohl Kameraschwenkköpfe, als auch deren Befestigungen werden hier nicht näher erläutert.

Die Laufrollen 3a, 3b, 4 drehen sich jeweils um eine horizontale Laufrollenachse 5a, 5b, 5c, wobei zwei Laufrollen 3a und 3b so angeordnet sind, dass ihre Laufrollenachsen 5a, 5b fluchten und eine gemeinsame Drehachse A bilden. Hierbei ist es sowohl möglich, dass die Laufrollen 3a und 3b starr montiert sind, als auch dass sie sich durch eine, nicht näher gezeigte Vorrichtung, beispielweise eine in horizontaler Ebene verdrehbare Lagerung, entsprechend ausrichten und fixieren lassen.

Eine weitere Laufrolle 4 ist mit ihrer Laufrollenachse 5c in einem Lagerelement 6 montiert, welches sich in horizontaler Ebene verdrehen lässt. Vorteilhaft ist eine Laufrollenanordnung, bei der die Laufrolle 4 die Spitze eines gleichschenkligen Dreiecks bildet und die Laufrollen 3a und 3b die Basis, da hierdurch eine gleichmäßige Gewichtsverteilung und ein symmetrisches Fahrverhalten beim Verdrehen der Laufrolle 4 erzielt wird. Im Idealfall sind die Laufrollen in einem gleichseitigen Dreieck angeordnet.

Zur Erzielung einer flachen Bauweise ist das Lagerelement 6 vorteilhaft in einem Lagerringelement 7 verdrehbar gelagert, welches an der Außenseite des Halterungselements 2 angeordnet ist und mit diesem verbunden oder einteilig ausgeführt ist. Selbstverständlich sind auch andere Anordnungen einer solchen, in horizontaler Ebene verdrehbaren Laufrolle 4 denkbar, beispielsweise indem die Laufrolle 4 in einer horizontal verdrehbaren, gabelförmigen Achshalterung unter dem Halterungselement 2 angebracht ist.

Vorgesehen, aber nicht in der Zeichnung sichtbar, ist eine Bremse, mit der die horizontale Verdrehung des Lagerelements 6 gegenüber dem Lagerringelement 7 arretiert werden kann. Alternative Lösungen anstelle einer Bremse wären, die Verdrehung so schwergängig auszulegen, dass ein unbeabsichtigten Verstellen der Laufrichtung ausgeschlossen werden kann oder beispielsweise selbsthemmende Getriebe, wie z.B. Schneckengetriebe oder Stellantriebe zur Ausrichtung zu verwenden.

Wird die Laufrichtung der Laufrolle 4 derart verdreht, dass ihre Laufrollenachse 5c nicht parallel zur gemeinsamen Drehachse A steht, dann schneidet sich eine zur Laufrollenachse 5c fluchtende Drehachse B mit der gemeinsamen Drehachse A in einem Punkt, welcher bei einer Verschiebung des Wagens das Rotationszentrum S einer Kreisfahrt bildet. Zur Bestimmung des Abstandes zwischen Rotationszentrum S und dem Wagen 1, ist auf der Oberseite des Halterungselements 2 über der gemeinsamen Drehachse A ein Referenzpunkt 10 angebracht. Der Abstand zwischen Rotationszentrum S und Referenzpunkt 10 bildet den einstellbaren Radius r einer derartigen Kreisfahrt.

Vorteilhaft ist ein derartiger Referenzpunkt 10 mittig zwischen den beiden Laufrollen 3a, 3b angebracht, insbesondere, wenn die Laufrollen in einem gleichschenkligen Dreieck angeordnet sind, bei dem die Laufrolle 4 die Spitze bildet, da so auf beiden Seiten des Wagens ein von der Drehstellung der Laufrolle 4 abhängiges, symmetrisches Fahrverhalten auftritt. Denkbar ist auch, dass der Referenzpunkt 10 auf dem Wagen nicht tatsächlich sichtbar ist, sondern, dass es sich hier um einen gedachten Referenzpunkt handelt.

Zur gezielten Ausrichtung der Laufrolle 4 ist im hier dargestellten Ausführungsbeispiel als Laufrichtungseinstellvorrichtung eine Skala 8 vorgesehen, die auf der Oberseite des Lagerelements 6 angebracht ist und gegenüber einer Ablesemarke 9 auf dem Lagerringelement 7 den Radius rablesbar macht, der sich bei einer entsprechenden Verdrehstellung zwischen Rotationszentrum S und Referenzpunkt 10 ergibt. Es versteht sich von selbst, dass eine solche Skala sowohl zur Ausrichtung einer Kreisfahrt mit einem vorbestimmten Radius r verwendet werden kann, wie auch zur Ermittlung des Kreisradius bei einer bestehenden Einstellung.
Ebenso könnte natürlich die Skala 8 auf dem Lagerringelement 7 und die Ablesemarke auf dem Lagerelement 6 angebracht sein.

Soll bei einer Kreisfahrt beispielsweise ein bestimmtes Objekt im Bildmittelpunkt bleiben, so ist es lediglich notwendig, den Wagen 1 so auszurichten, dass die gemeinsame Drehachse A auf das Objekt weist, dann die Distanz zwischen Objekt und Referenzpunkt 10 zu ermitteln und den ermittelten Wert an der Skala 8 gegenüber der Ablesemarke 9 einzustellen. Das Objekt befindet sich nunmehr im Drehzentrum der Kreisfahrt.

Vorteilhaft und bekannt für einen derartigen Wagen 1 ist eine, hier nicht näher gezeigte Bremse, die ein ungewolltes Verfahren verhindert und beispielsweise durch das Blockieren einer oder mehrerer Laufrollen 3a,3b,4 erreicht werden kann. Alternativ kann beispielsweise auch ein Bremselement aus der Unterseite des Halterungselements 2 ausgefahren werden, welches Kontakt mit der Aufstandsfläche bekommt.

Eine vorteilhafte Weiterbildung lässt sich erreichen, wenn das Lagerringelement 7 und das Halterungselement 2 trennbar durch eine Befestigungsvorrichtung 16 miteinander verbunden sind. Im einfachsten Fall kann eine solche Verbindung mittels einfacher Befestigungsschrauben 17 und optionalen, nicht näher gezeigten Passstiften erzielt werden. Denkbar sind aber auch Verbindungen mittels Nut und Feder oder andere Passungen oder Einhängvorrichtungen.

Vorteil einer solchen mitsamt Laufrolle 4 und Lagerungen 6,7 abnehmbaren Laufrichtungseinstellvorrichtung ist, dass andere Laufrollenmodule an dem Halterungselement 2 befestigt werden können, welche beispielsweise mit sich selbstständig in Fahrtrichtung ausrichtenden Laufrollen ausgestattet sind, wodurch Lenkbewegungen des Kamerawagens möglich werden.

Fig. 2 zeigt eine Detailansicht einer bereits erläuterten Skala 8 auf einem Lagerelement 6 mit den Merkmalen der Beschreibung aus Fig.1.

In diesem Ausführungsbeispiel weist die Skala 8 einen 180° weiten Kreisabschnitt mit metrischem Skalenbereich 11 und einen 180° weiten Kreisabschnitt mit einem zölligen Skalenbereich 12 auf, welche sich gegenüberliegen und jeweils durch die Laufrollenachse 5a begrenzt werden. Anhand von Strichen und Zahlen wird der jeweilige Radius r gegenüber einer Ablesemarke 9 angezeigt, welcher bei einer Kreisfahrt ausgeführt würde. Durch eine Beschriftung "centimeter", bzw. "inch" wird die Einheit definiert. Zudem wird der metrische und zöllige Skalenbereich 11,12 klar von einander unterschieden.

Neben einer metrischen und einer zölligen Darstellung des Radius r sind weitere mittelbare oder unmittelbare Anzeigen des Abstandes zwischen Rotationszentrum S und Referenzpunkt 10 denkbar. Selbstverständlich könnten andere Maßeinheiten, wie z.B. Millimeter anstelle von Zentimetern Verwendung finden. Ebenso ließe sich anstelle des Radius auch der Durchmesser einer Kreisfahrt anzeigen. Auch wären z.B. Werte von 1 bis 10, alphabetische Buchstabenfolgen oder Namen, bzw. Markierungen denkbar, welche definierten Abständen zwischen Rotationszentrum S und Referenzpunkt 10 entsprechen.

Neben der bereits erläuterten Ablesemarke 9 weist dieses Ausführungsbeispiel eine weitere Ablesemarke 9a auf, welche auf dem Lagerringelement 7 gegenüberliegend angeordnet ist. Hierdurch wird es möglich, gleichzeitig mit metrischen und zölligen Radien zu arbeiten.

Die Skala 8 weist zwei weitere gesonderte Markierungen 13 auf, die in der dargestellten Ausführungsform mit dem Buchstaben "P" versehen sind und anzeigen, dass sich die Laufrollenachse 5a der Laufrolle 4 in einer Ausrichtung befindet, welche parallel zur gemeinsamen Drehachse A ist. Somit weisen alle Laufrollen 3a, 3b und 4 dieselbe Ausrichtung auf und der Wagen 1 vollführt eine lineare Fahrtbewegung.

Fig. 3 zeigt eine alternative Ausführung einer Laufrolleneinstellvorrichtung der in horizontaler Ebene verdrehbaren Laufrolle 4. Zur Anzeige des Radius r oder des Durchmessers einer Kreisfahrt ist in diesem Fall eine Digitalanzeige 14 vorgesehen. Vorteilhaft ist eine derartige Anzeige mit der Möglichkeit einer metrischen und zölligen Darstellung versehen, welche sich beispielsweise mittels eines Schalters umstellen lässt. Ebenso ist eine gleichzeitige Anzeige beider Werte denkbar.

Die Verdrehung des Lagerelements 6 im Lagerringelement 7 lässt sich beispielsweise durch einem Inkrementalgeber, vorzugsweise durch einen Absolutinkrementalgeber, ermitteln, welcher in Fig.3 nicht näher gezeigt ist. Über eine einfache Winkelfunktion wird der Verdrehwinkel auf der Digitalanzeige 14 als numerischer Wert oder andere mittelbare oder unmittelbare Darstellungen des Radius r einer Kreisfahrt dargestellt.

Denkbar ist ebenfalls die horizontale Verdrehung der Laufrollenachse 5c mittels eines Stellantriebs 15, beispielsweise durch einen Servo- oder Schrittmotor zu erreichen, welcher die Laufrichtung derart ausrichtet, dass ein vorher bestimmter Radius r oder Durchmesser in einer Kreisfahrt erreicht wird. Eine derartige Ausführung ist natürlich auch ohne eine Digitalanzeige 14 denkbar.

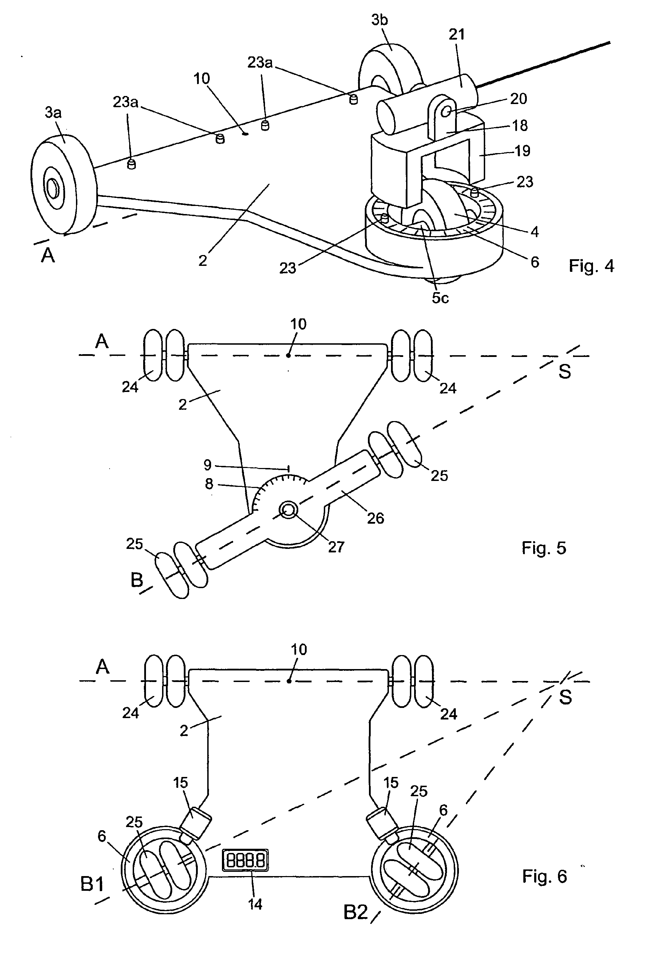

Fig. 4 zeigt einen Wagen mit einer weiteren alternativen Ausführung einer Laufrolleneinstellvorrichtung in Form einer Peilvorrichtung 18 zur Einstellung eines vorbestimmten Radius r einer Kreisfahrt.

Die hier dargestellte Peilvorrichtung 18 umfasst ein Laserpeilelement 21, dessen Strahl in einer durch die Laufrollenachse 5c der einstellbaren Laufrolle 4 verlaufenden Vertikalebene vorteilhaft verschwenkbar gelagert ist. Anstelle eines Laserpeilelements sind beispielsweise auch ein Zielrohr, eine Kimme und Korn oder andere optische Peilelemente vorstellbar. Denkbar wäre auch, ein derartiges Peilelement direkt in die Laufrollenachse 5c einzubauen.

Ebenfalls vorteilhaft ist eine derartige Peilvorrichtung 18 lösbar mit dem Lagerelement 6 verbunden. Im dargestellten Ausführungsbeispiel weist eine Peilelement-Halterung 19 auf der Unterseite Führungsbohrungen auf, welche in geeignet ausgelegte Registrierpins 23 auf der Oberseite des Lagerelements 6 eingreifen. Es sind natürlich auch andere formschlüssige Verbindungen zwischen Peilvorrichtung 18 und Lagerelement 6 denkbar. Ebenso könnte eine feste Verbindung vorgesehen sein. Durch die auf der Unterseite der Peilelement-Halterung 19 offene Bauform kann eine solche Peilvorrichtung 18 den oberen Bereich einer Laufrolle 4 aufnehmen.

Weitere Registrierpins 23 sind auf dem Halterungselement 2 auf der gemeinsamen Drehachse A angebracht, die ein Aufstecken der Peilvorrichtung 18 derart ermöglichen, dass der der Strahl des Laserpeilelements 21 in einer durch die gemeinsame Drehachse A verlaufenden Vertikalebene verschwenkbar ist. Die dargestellte Peilvorrichtung 18 lässt sich sowohl auf dem Lagerelement 6 wie auch auf der gemeinsamen Drehachse A aufstecken.
Alternativ ist vorstellbar, ein Peilelement direkt in die gemeinsame Drehachse A einzubauen.

Zur Einstellung einer Kreisfahrt mit einem festgelegtem Radius r, wird mittels der auf das Halterungselement 2 aufgesteckten Peilvorrichtung 18 auf der gemeinsamen Drehachse A ein Punkt S mit einem vorgegebenen horizontalen Abstand zum Referenzpunkt 10 bestimmt. Durch Aufstecken der Peilvorrichtung 18 auf das Lagerelement 6 lässt sich dieses nun in horizontaler Ebene derart verdrehen, dass der Strahl des Laserpeilelements 21 ebenfalls auf den gemeinsamen Schnittpunkt S weist.

Natürlich kann eine derartige Peilvorrichtung 18 nicht nur zur Bestimmung des Rotationsabstandes r, sondern auch zur Positionierung eines Objektes einer bereits eingestellten Kreisfahrt verwendet werden. Hierzu wird die Peilvorrichtung 18 abwechselnd auf das Halterungselement 2 auf der gemeinsamen Drehachse A und auf das Lagerelement 6 aufgesteckt, wobei das Objekt derart verschoben wird, dass in beiden Fällen der Strahl des Laserpeilelements 21 auf das Objekt weist.

Fig. 5 zeigt die Ausführungsform eines Wagens mit zwei als Doppelrollen 24 ausgeführten Laufrollen, deren Achsen mit einer gemeinsamen Drehachse A fluchten und zwei weiteren Doppelrollen 25 welche jeweils and den Enden eines sich länglich erstreckenden Lagerelements 26 montiert sind, dass in seinem Zentrum um eine senkrecht stehende Achse 27 verdrehbar gelagert ist. Die Verdrehstellung ist mittels einer nicht gezeigten, aber bereits erläuterten Bremse zu arretieren.

Derartige Doppelrollen werden häufig bei Kamerawagen verwendet, welche auf einem auf der Oberseite rundförmigen Schienenprofil aufliegen. Durch die hier dargestellten Doppelrollen kann ein derartiger Wagen sowohl auf einem Schienenprofil, beispielsweise für lineare Fahrten, wie auch auf einer Lauffläche für zusätzliche Kreisfahrten verwendet werden.

Die Drehachsen der beiden Doppelrollen 25 fluchten mit einstellbaren Drehachse B und schneiden sich in einem Punkt S. Auf einer Skala 8 ist gegenüber einer Ablesemarke 9 der Abstand zwischen dem Referenzpunkt 10 und dem Schnittpunkt S mittelbar oder unmittelbar ablesbar.

Fig. 6 zeigt die Ausführungsform eines Wagens mit ähnlichen Merkmalen wie in Fig. 5, wobei hier zwei, jeweils in einem Lagerelement 6 montierte Doppelrollen 25 mittels jeweils eines Stellantriebs 15 so ausgerichtet werden, dass sich die gedachten Verlängerungen ihrer Laufrollenachsen B1 und B2 in einem Schnittpunkt S treffen. An einer digitalen Anzeige 14 ist der Abstand r zwischen dem Referenzpunkt 10 und dem Schnittpunkt S mittelbar oder unmittelbar ablesbar. Ebenso ist es möglich, die Doppelrollen 25 zur Erzielung einer Kreisfahrt mit einem vorbestimmten Radius r auszurichten.

Anstelle der Stellantriebe kann eine derartige Laufrolleneinstellvorrichtung auch eine mechanische Lenkung, wie aus WO 00/51911 bekannt, umfassen, welche mit einer entsprechenden Anzeige zur Darstellung des Abstandes r gekoppelt ist. Ebenso könnten auf den Lagerelementen 6 Skalen angebracht sein, die den Abstand r an beiden Doppelrollen 25 jeweils einzeln einstellbar machen.

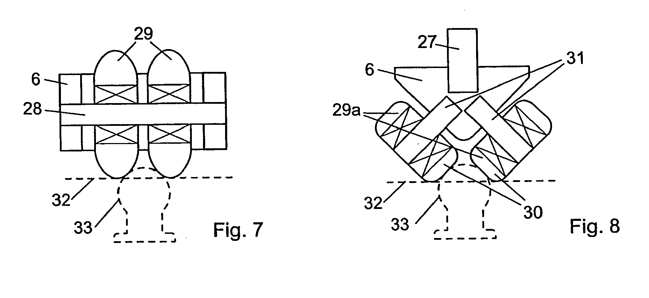

Fig. 7 zeigt eine Schnittdarstellung durch eine Doppelrolle 29, bestehend aus zwei parallel zueinander angeordneten Laufrollen, welche um eine gemeinsame Achse 28 verdrehbar gelagert sind. Die gemeinsame Laufrollenachse 28 ist hierbei in einem Lagerelement 6 montiert.
Wie bereits erwähnt lässt sich eine derartige Doppelrolle sowohl auf einer flachen Aufstandsfläche, wie auch auf einem nach oben rundförmig ausgebildetes Schienenprofil verwenden.

Fig. 8 zeigt ein Schnittdarstellung durch eine Doppelrolle 29a mit zwei im Abstand schräg zueinander angeordneten Rollenelementen 30, deren Mittelachsen 31 sich in einer gemeinsamen Vertikalebene schneiden, wobei der obere Abstand der Mittelachsen 31 kleiner ist als der untere. Die Doppelrolle 29a ist in einem Lagerelement 6 um eine senkrecht stehende Achse 27 verdrehbar gelagert.
Auch diese Anordnung ist dazu geeignet, die Doppelrolle 29a gleichermaßen auf einer flachen Aufstandsfläche 32 wie auf einem nach oben rundförmig ausgebildetem Schienenprofil 33 zu verwenden. Als Drehachse der Doppelrolle 29a ist in diesem Fall eine durch die Mittelpunkte der Rollenelemente 30 verlaufende horizontale Achse zu verstehen.

### Bezugszeichenliste:

- 1: Wagen
- 2: Halterungselement
- 3a,3b: Laufrollen, deren Laufrollenachsen fluchten
- 4: Laufrolle, in horizontaler Ebene verdrehbar
- 5a,5b: Laufrollenachsen, fluchtend
- 5c: Laufrollenachse, in horizontaler Ebene verdrehbar
- 6: Lagerelement
- 7: Lagerringelement
- 8: Skala
- 9: Ablesemarke
- 9a: zweite Ablesemarke
- 10: Referenzpunkt
- 11: metrischer Skalenbereich
- 12: zölliger Skalenbereich
- 13: gesonderte Markierung für parallele Ausrichtung aller Laufrollen
- 14: digitale Anzeige
- 15: Stellantrieb
- 16: Befestigungsvorrichtung
- 17: Befestigungsschrauben
- 18: Peilvorrichtung
- 19: Peilelement-Halterung
- 20: gabelförmige Achshalterung
- 21: Laserpeilelement
- 22: Schwenkachse
- 23: Registrierpins
- 24: Doppelrolle auf gemeinsamer Drehachse A
- 25: Doppelrolle auf verdrehbarer Drehachse B
- 26: längliches Lagerelement
- 27: senkrecht stehende Achse
- 28: gemeinsame Achse einer Doppelrolle
- 29: Doppelrolle mit parallel stehenden Laufrollen
- 29a: Doppelrolle mit schräg zueinander angeordneten Rollenelementen
- 30: Rollenelemente
- 31: Mittelachsen
- 32: Aufstandsfläche
- 33: Schienenprofil

## Patentansprüche

1. Wagen, insbesondere Kamerawagen, mit mindestens drei im Winkelabstand um eine vertikale Achse angeordneten, jeweils um eine horizontale Laufrollenachse (5a, 5b, 5c) drehbaren Laufrollen (3a , 3b ,4), wobei die Laufrollenachsen (5a, 5b) von mindestens zwei Laufrollen (3a, 3b) mit einer gemeinsamen Drehachse (A) fluchten und die Laufrollenachse (5c) wenigstens einer weiteren einstellbaren Laufrolle (4) in einer horizontalen Ebene drehbar ist, **gekennzeichnet durch** eine Laufrichtungseinstellvorrichtung (8, 9, 9a, 11, 12, 14, 15, 18, 21) zur mittelbaren oder unmittelbaren Anzeige und/oder Ermittlung und/oder Einstellung des Abstandes (r) eines Referenzpunktes (10) an dem Wagen (1) zu einem von der Drehstellung der weiteren Laufrolle (4) abhängigen Schnittpunkt (S) zwischen der gemeinsamen Drehachse (A) und der mit der Laufrollenachse (5c) der einstellbaren Laufrolle (4) fluchtenden Drehachse (B).

2. Wagen nach Anspruch 1, **dadurch gekennzeichnet, dass** die Laufrichtungseinstellvorrichtung eine Skala (8) umfasst, welche den Abstand (r) mittelbar oder unmittelbar an einer Ablesemarke (9, 9a) anzeigt.

3. Wagen nach Anspruch 2, **dadurch gekennzeichnet, dass** die Skala einen metrischen Skalenbereich (11) und/oder einen zölligen Skalenbereich (12) aufweist.

4. Wagen nach Anspruch 1, **dadurch gekennzeichnet, dass** die Laufrichtungseinstellvorrichtung eine digitale Anzeige (14) umfasst, welche den Abstand (r) mittelbar oder unmittelbar numerisch anzeigt.

5. Wagen nach Anspruch 4, **dadurch gekennzeichnet, dass** die digitale Anzeige (14) den Abstand (r) mittelbar oder unmittelbar metrisch und/oder zöllig anzeigt.

6. Wagen nach einem der vorhergehenden Ansprüche, **dadurch gekennzeichnet, das** eine gesonderte Anzeige (13) vorgesehen ist, die eine parallele Stellung aller Laufrollenachsen (5a, 5b, 5c) anzeigt.

7. Wagen nach Anspruch 1, **dadurch gekennzeichnet, dass** die Laufrichtungseinstellvorrichtung einen Stellantrieb (15) umfasst, welcher die wenigstens einstellbare Laufrolle (4) zur Erhaltung eines vorbestimmten Abstands (r) einstellt.

8. Wagen nach Anspruch 1, **dadurch gekennzeichnet, dass** die Laufrichtungseinstellvorrichtung eine Peilvorrichtung (18) umfasst, die so konstruiert ist und angeordnet werden kann, dass eine erste Peilung in einer Vertikalebene der gemeinsamen Drehachse (A) liegt und in einem vorbestimmten Abstand (r) zur Referenzmarke (10) einen Punkt (S) definiert, und eine zweite Peilung in einer durch die Drehachse (B) der einstellbaren Laufrolle (4) verlaufenden Vertikalebene liegt, wobei die einstellbare Laufrolle (4) so verdrehbar ist, dass die zweite Peilung der Peilvorrichtung (18) ebenfalls auf den Schnittpunkt (S) weist.

9. Wagen nach Anspruch 8, **dadurch gekennzeichnet, dass** die Peilvorrichtung (18) ein Laserpeilelement (21) umfasst.

10. Wagen nach Anspruch 8, **dadurch gekennzeichnet, dass** die Peilvorrichtung (18) ein Peilelement (21) umfasst, das in der jeweiligen Vertikalebene verschwenkbar ist.

11. Wagen nach einem der vorhergehenden Ansprüche, **dadurch gekennzeichnet, dass** die Laufrichtungseinstellvorrichtung (8, 9, 9a, 11, 12, 14, 15, 18, 21) einschließlich der einstellbaren Laufrolle (4) lösbar an einem Halterungselement (2) angebracht ist.

12. Wagen nach einem der vorhergehenden Ansprüche, **dadurch gekennzeichnet, dass** wenigstens eine Laufrolle von einer Doppelrolle (29, 29a) gebildet wird.

13. Wagen nach Anspruch 12, **dadurch gekennzeichnet, dass** die Doppelrolle (29a) zwei im Abstand schräg zueinander angeordnete Rollenelemente (30) umfasst, deren Mittelachsen (31) sich in einer gemeinsamen Vertikalebene schneiden, wobei der obere Abstand der Mittelachsen (31) kleiner ist als der untere.
